# EUROPEAN PATENT APPLICATION

(11) **EP 3 985 475 A1**
(43) Date of publication of application: **20.04.2022**
(21) Application number: 21199979.2
(22) Date of filing: 29.01.2019
(51) Int. Cl.: G05D 23/19, H04W 4/80, F24F 11/62, F24F 11/58, F24F 11/30, G06K 17/00

(54) **LOW POWER NETWORK CONNECTIVITY OF A BUILDING CONTROL DEVICE**

(30) Priority: 31.01.2018 US 201815885279
(62) Divisional of application: 19706066.8
(71) Applicant: Ademco Inc., Golden Valley, MN 55422 (US)
(72) Inventor: NEMCEK, Adam, Golden Valley, 55422 (US); BECVAR, Daniel, Golden Valley, 55422 (US); HREBICEK, Tomas, Golden Valley, 55422 (US)
(74) Representative: Murgitroyd & Company

(57) **Abstract**

A device incorporating electronics including a transmitter to transmit commands to a remote HVAC unit, a communication module for connecting the device to a low power network, and a controller to communicate with the HVAC unit and communicate with a remote device over the low power network. The device further incorporates a power source to power the electronics.

## Description

The application claims priority to U.S. Patent Application No. 15/885,279, which was filed on January 31, 2018, and is entitled, "LOW POWER NETWORK CONNECTIVITY OF A BUILDING CONTROL DEVICE."

### TECHNICAL FIELD

The disclosure relates generally to building automation systems, and more particularly to building control devices for use in such building automation systems.

### BACKGROUND

Low power networks such as low power wireless networks (LPWANs) were created for machine-to-machine (M2M) and internet of things (IoT) networks. LPWANs operate at a lower cost with greater power efficiency than traditional mobile networks. They are also able to support a greater number of connected devices over a larger area. LPWANs can accommodate packet sizes from 10 to 1,000 bytes at uplink speeds up to 200 Kbps. LPWAN's long range varies from 2 km to 1,000 km, depending on the technology. Furthermore, LPWAN is not a single technology, but a group of various low-power, wide area network technologies that take many shapes and forms. LPWANs can use licensed or unlicensed frequencies and include proprietary or open standard options. Some LPWANs may run over a public network in the 868 MHz or 902 MHz bands. These LPWANs can deliver messages over distances of 30-50 km in rural areas, 3-10 km in urban settings and up to 1,000 km in line-of-site applications. Random phase multiple access (RPMA) is another type of LPWAN. Though it has a shorter range (up to 50 km line of sight and with 5-10 km non-line of sight), it offers better bidirectional communication.

### SUMMARY

In an example of the disclosure, a device may incorporate electronics including a transmitter configured to wirelessly transmit one or more commands to a remote HVAC unit, a communication module for connecting the device to a low power network, and a controller. The controller may be configured to communicate with the HVAC unit via the transmitter, and communicate with a remote device over the low power network via the communication module. The device may also include a power source operatively coupled to the electronics and configured to power the electronics.

Alternatively or additionally to the foregoing, the device may be further configured to communicate via the transmitter with one or more sensors for sensing environmental conditions.

Alternatively or additionally to any of the embodiments above, the electronics may further incorporate one or more sensors for sensing environmental conditions.

Alternatively or additionally to any of the embodiments above, the device may further incorporate a housing with the electronics and power source disposed therein.

Alternatively or additionally to any of the embodiments above, the electronics may further incorporate a user interface including a display, wherein the controller is configured to display on the display current environmental conditions and desired environmental conditions specified by a user via the user interface.

Alternatively or additionally to any of the embodiments above, the remote device may send instructions over the low power network to the device to control the HVAC unit.

Alternatively or additionally to any of the embodiments above, the low power network may be a low power wide area network (LPWAN).

Alternatively or additionally to any of the embodiments above, the LPWAN may be a NarrowBand Internet of Things (NB-IoT) Network.

Alternatively or additionally to any of the embodiments above, the LPWAN may be a LoRa Network.

Alternatively or additionally to any of the embodiments above, the device may be a thermostat.

In another example of the disclosure, a thermostat may incorporate a transmitter configured to wirelessly transmit one or more commands to a remote HVAC unit, a communication module for connecting the device to a low power network, and a controller operatively connected to the transmitter and the communication module. The controller may be configured to communicate with the HVAC unit via the transmitter, and communicate with a remote device over the low power network via the communication module. The thermostat may also include a power source operatively coupled to the transmitter, the communication module, and the controller and configured to power the transmitter, the communication module, and the controller.

Alternatively or additionally to the foregoing, the thermostat may further incorporate a housing with the transmitter, the communication module, the controller, and the power source disposed therein.

Alternatively or additionally to any of the embodiments above, the thermostat may further incorporate one or more sensors for sensing environmental conditions, and a user interface including a display, wherein the controller may be configured to display on the display the environmental conditions and desired environmental conditions specified by a user via the user interface.

Alternatively or additionally to any of the embodiments above, the thermostat may be further configured to communicate via the transmitter with one or more sensors for sensing environmental conditions and the thermostat may further incorporate a user interface including a display, wherein the controller is configured to display on the display the environmental conditions and desired environmental conditions specified by a user via the user interface.

Alternatively or additionally to any of the embodiments above, the low power network may be a NarrowBand Internet of Things (IoT) Network.

Alternatively or additionally to any of the embodiments above, the low power network may be a LoRa Network.

In another example of the disclosure, a thermostat may incorporate a housing and electronics disposed within the housing. The electronics may include a transmitter configured to wirelessly transmit one or more commands to a remote HVAC unit, a communication module for connecting the device to a low power wide area network (LPWAN), and a controller. The controller may be configured to communicate with the HVAC unit via the transmitter and communicate with a remote device over the LPWAN via the communication module. The electronics may further include a user interface including a display, wherein the controller is configured to display on the display environmental conditions and desired environmental conditions specified by a user via the user interface. The thermostat may also incorporate a power source disposed within the housing, operatively coupled to the electronics, and configured to power the electronics.

Alternatively or additionally to the foregoing, the electronics may further incorporate one or more sensors for sensing environmental conditions.

Alternatively or additionally to any of the embodiments above, the controller may be further configured to communicate via the transmitter with one or more sensors for sensing environmental conditions.

Alternatively or additionally to any of the embodiments above, the LPWAN may be a NarrowBand Internet of Things (IoT) Network.

The above summary of some illustrative embodiments is not intended to describe each disclosed embodiment or every implementation of the present disclosure. The Figures and Description which follow more particularly exemplify these and other illustrative embodiments.

### BRIEF DESCRIPTION OF THE FIGURES

The disclosure may be more completely understood in consideration of the following description in connection with the accompanying drawings, in which:
Figure 1 is a schematic block diagram of an illustrative building control device;
Figure 2 is a schematic view of an illustrative building control device;
Figures 3A-3C are schematic views illustrating an approach for connecting a mobile device to a building control device;

While the disclosure is amenable to various modifications and alternative forms, specifics thereof have been shown by way of example in the drawings and will be described in detail. It should be understood, however, that the intention is not to limit the disclosure to the particular embodiments described. On the contrary, the intention is to cover all modifications, equivalents, and alternatives falling within the spirit and scope of the disclosure.

### DESCRIPTION

For the following defined terms, these definitions shall be applied, unless a different definition is given in the claims or elsewhere in this specification.

All numeric values are herein assumed to be modified by the term "about," whether or not explicitly indicated. The term "about" generally refers to a range of numbers that one of skill in the art would consider equivalent to the recited value (i.e., having the same function or result). In many instances, the terms "about" may include numbers that are rounded to the nearest significant figure.

The recitation of numerical ranges by endpoints includes all numbers within that range (e.g. 1 to 5 includes 1, 1.5, 2, 2.75, 3, 3.80, 4, and 5).

As used in this specification and the appended claims, the singular forms "a", "an", and "the" include plural referents unless the content clearly dictates otherwise. As used in this specification and the appended claims, the term "or" is generally employed in its sense including "and/or" unless the content clearly dictates otherwise.

It is noted that references in the specification to "an embodiment", "some embodiments", "other embodiments", and so forth, indicate that the embodiment described may include one or more particular features, structures, and/or characteristics. However, such recitations do not necessarily mean that all embodiments include the particular features, structures, and/or characteristics. Additionally, when particular features, structures, and/or characteristics are described in connection with one embodiment, it should be understood that such features, structures, and/or characteristics may also be used connection with other embodiments whether or not explicitly described unless clearly stated to the contrary.

The following description should be read with reference to the drawings in which similar structures in different drawings are numbered the same. The drawings, which are not necessarily to scale, depict illustrative embodiments and are not intended to limit the scope of the disclosure. Although examples of construction, dimensions, and materials may be illustrated for the various elements, those skilled in the art will recognize that many of the examples provided have suitable alternatives that may be utilized.

A major issue in the connected product market, for example, the connected thermostat market, is a requirement to provide a combination of a long-term product life, while providing constant connectivity to a cloud and/or local mobile device. Currently, there is a struggle to achieve a multi-year, full-power delivery, from a power source, such as batteries or a so-called "power-stealing", for example, while removing a burden of the user to replace the power source too often. Therefore, the issue is to deliver a device, such as a thermostat, which could run from a low-energy source (e.g., batteries, "power-stealing", and the like), while being able to run from these sources as long as possible (e.g., 1 year, 2 years, 3 years, 4 years, 5 years, and so on), while constantly maintaining cloud connectivity. It is believed that the ability to deliver a system solution for a connected device, such as a connected thermostat, which would keep itself connected to a cloud network, which would have a nearly instant response to any user actions (via Cloud or Mobile App), and which would not need a too-often periodical power source (e.g., battery) replacement, could achieve a large market share amongst the connected devices actually sold. Moreover, the price of such a device may also play a major role in the overall connected device market share (i.e., the hardware and software solution must be cheap and competitive).

In certain embodiments discussed herein, a low-power long-life (Battery Powered) cloud connected device (e.g., a thermostat) enabled by a NarrowBand Internet of Things (NB-IOT) / low-powered wide area network (LPWAN) may be disclosed. Examples of this device may be one possible approach to the task described. In some examples, the device may describe a system solution, which consists of a connected thermostat, designed to run as a low-power system, utilizing the NB-IOT / Lora / (and alike) connectivity type (e.g., the LPWAN connectivity) in a way applicable to the Honeywell Connected Edge Devices (e.g., Connected Thermostats). Through a specific selection of such a connectivity mechanism, multiple issues previously present in all the connected thermostat offerings may be removed. Furthermore, the overall end-to-end system design may be described by examples discussed herein.

Some examples discussed herein, may cover a generic or a specific approach of providing a direct link connection between connected device hardware, and a Local Service Provider (e.g., a local public radio network manager, such as Verizon (US), CRA (CZ), or the like). This connection might be done through a generic LTE link; yet these examples may cover a specific, previously unmapped area, in order to achieve the previously listed goal of a direct LPWAN connection between the connected device hardware, and the Cloud and Mobile App part, as a complete end-to-end system. Embodiments of the present disclosure may expand the end-to-end system design of a cloud-connected thermostat (or any such device) ecosystem, by providing a fully-alternate solution, not existing on market as of today. For instance, there are many cloud-connected devices that are connected using various technologies, such as Wi-Fi, Sub-GHz and such. Currently, each device needs a local "gateway" which needs to be installed and maintained by the homeowner/user, including a periodical payment by the homeowner/user to the Internet Service Provider, in order to retain a connectivity to such a gateway (e.g., Wi-Fi router, Sub-GHz gateway, and so forth).

According to various embodiments, a device may be disclosed that does not need a local, Service provided, connectivity. In some examples, a solution may be proposed that removes a need for any locally owned and maintained hardware. The idea of a having a direct link from a device to a cloud, while removing the homeowner/user and an "ISP-last-mile" from the connectivity path, is new in the area of smart devices, for example, smart thermostats.

In some examples, the connected device may be directly connected to an LPWAN Service Provider, through a worldwide standardized protocol (e.g., NB-IOT, Lora, or other protocol). This may allow a company such as Honeywell to design a single product, which could be easily provisioned to connect to any such regional network (either by the company, based on the area-of-sale, or by a contractor who would install such a device). The provisioning system may be simple enough that a homeowner/user may be able to do this on its own.

In some examples, the device disclosed may remove a complete HUE problem of the Home-Owner-driven installation of the connectivity part of a product. This may alleviate struggles, on the Home-Owner's part, where this generated a lot of Customer Care calls. In some cases, examples may describe a direct LPWAN connection provided for a connected device, while removing all the intermediate steps (Internet "last-mile") as it was known before (Wi-Fi connectivity), which cause a wide area of problems (Wi-Fi router incompatibility, for example). In some examples, the LPWAN connection may be so low-power, that it enables the connected device to stay connected (through a LPWAN's cloud to a company cloud) and it runs over a world-wide standardized protocols and widely deployed LPWAN networks, while being able to run from a small set of power sources (e.g., batteries) over a period of multiple years, before needing a replacement.

In some cases, the cost of an LPWAN connected device may drop significantly, compared to a device connected via Wi-Fi (as one example). This may allow a competitive edge in the market place. In some examples, the LPWAN connected hardware may be so low powered, that it also decreases the temperature impact on the device; which is another issue that requires a special approach on the related art devices (i.e., a need for a "thermal compensation" for a Wi-Fi connected device, where the connectivity (Wi-Fi) part adds significant heat to the device body, thus requiring an elaborate and fragile system to compensate the physically measured temperature to a true in-room temperature value). Furthermore, in various embodiments, the connectivity may be maintained completely out of any failure mode, the Home Owner, or the ISP with its last-mile connection. This is a frequent issue for the prior connected devices, where the Wi-Fi and Internet connectivity is causing a lot of issues and unhappy customers.

In certain embodiments, a simplified commissioning (installation) process for a connected device, may be described. In some cases, a System Design, focusing on three major areas: the Edge Device part (i.e., the connected device), the Cloud System Design, and finally the remote device part of the system. In some examples, the connected device may consists of a device core (e.g., a control algorithm, a user interface, a temperature measurement, or so on), a remote connectivity part (e.g., an LPWAN connection, utilizing a LoRa, NB-IOT or similar radio-link very-low-power interface) to provide a link between the device itself and the cloud, and a local connectivity part (e.g., Bluetooth Low Energy, for example) to provide a possibility for a physically-local configuration process (using a smartphone to set up various parameters of a connected device).

In some cases, the device core may be a default, re-usable core, tailored to specific product needs. In some cases, the remote connectivity part may be one of the main areas of this disclosure. For instance, the use of LPWAN connectivity may dictate a small, binary protocol to be used. For example, a typical size of a message may be about 10 to 100 bytes. This is one of the primary drivers to allow for a low power, long-life connected device. The remote connectivity may be constantly available, as it keeps itself in an ultra-low-power consumption state, until a message is to be received or sent. In some examples, the round-trip-time for a message (send by a Home-Owner through Cloud to a device) may be less than a few seconds, typically about a second, when sent utilizing a LPWAN network. In certain embodiments, the local connectivity part may be used to both commission a device, and for any local device control by a Home-Owner (utilizing Home-Owner's mobile phone with a Honeywell or other company App). By combing a remote and local connectivity, the Home-Owner user's experience may be very positive. At home, this provided almost instantaneous response on any action taken by the Home-Owner (change on App instantly reflects on Device, and vice versa), while the remote control and monitoring may also be quick and pleasant (within seconds on each change).

According to various embodiments, the rate on which the LPWAN is utilized to send messages may be configurable. For instance, during a peak moment (e.g., schedule change, remote temperature changes, geofence, or the like) there could be multiple messages sent while the rest of a day, there might none or very few to none messages sent.

In some cases, the commissioning part may be required to properly allow a connected device to join a regional LPWAN network. For instance, on a LoRa based network, a few inputs may need to be provided (e.g., network ID, keys, or so on) which could be provided by the factory in advance; transferred to the connected device via the local-link (e.g., a BLE-link) from a remote device (e.g., a mobile phone with the application) during installation (or reinstallation) in a building.

Each part may be designed in a way that makes a user, operator, technician, or Home-Owner completely free of any bother on that part because the mobile-phone application can do this transparently (while the Contractor or the Home-Owner proceeds with the initial setup of the parameters, such as a heating equipment type, the App that would be used for that part, will also transfer the LPWAN-provisioning data to the physical device, based on the inputs from the factory and possibly location data to pick the right LPWAN network, and so forth). The factory may then have control over the device even before the user decides to finally configure it. Typically, the factory may create a unique identifier (e.g., a MACID) to each manufactured device. This MACID may stay with the device through its whole existence, and it exists in parallel with the LPWAN network identifier. The actual assignment between the physical device (represented by the MACID), the LPWAN-identifier, and the actual user (i.e., the user's account), will happen once the mobile app connects to the very device (e.g., once app does all the above-mentioned background data-transfers to the device). It is possible for the factory to not only assign the MACID on the moment of manufacture, but also to assign a specific LPWAN-identificator (e.g., all the required data and keys to identify a device to LPWAN) during the same moment of manufacture. This may be possible in case there is an agreement between the factory and the LPWAN network providers.

In some cases, the cloud solution may consist of a two parts, a Cloud-to-Cloud (C2C) part which may connect each regional LPWAN network provider's cloud system, to a company such as a global Honeywell cloud (e.g., Granite Global Integration Layer). This is an industrial standard of doing LPWAN. A remote device may then only need a direct Honeywell or other company Cloud connection (via any Internet link - be it LTE, Wi-Fi), and a local BLE link to control the connected device once in its vicinity. While the BLE link is utilized, the remote device has the Honeywell or other company Cloud Connectivity available as well. In this case, the remote device may not be connected directly to the LPWAN as there is an alternate Cloud link.

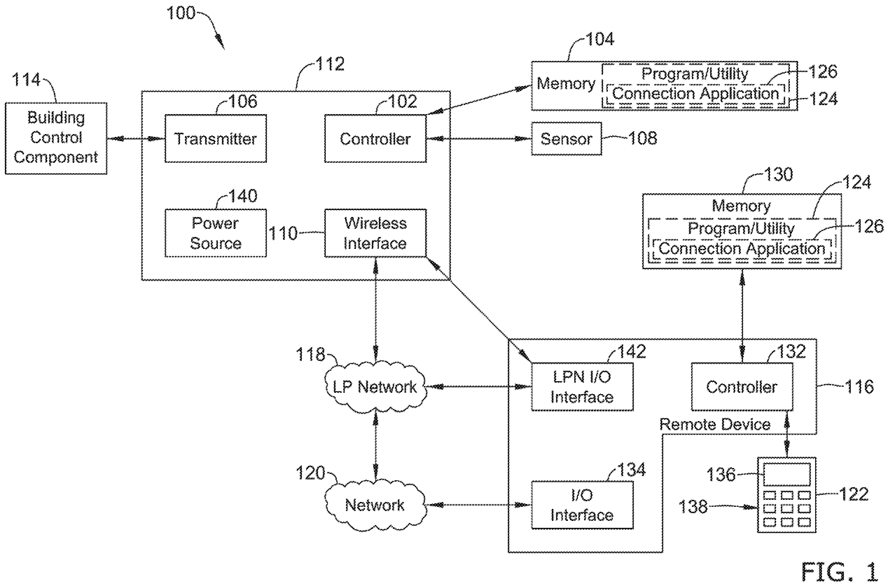

Turning now to the figures, Figure 1 is a schematic block diagram of an illustrative building control device 100. In the example shown, the building control device 100 includes a controller 102 (e.g., microcontroller, microprocessor, or the like) operatively coupled to a memory 104, a transmitter 106 (sometimes a transceiver), a sensor(s) 108 (e.g., temperature sensors, humidity sensors, other environmental sensors, occupancy sensors, light sensors, current sensors, smoke sensors, or so on), a communication module 110, and a power source 140. The memory 104 and/or sensor(s) 108 may be located in a housing 112 of the building control device 100 and/or located remotely from the building control device 100.

The transmitter 106 may be configured to communicate using one or more wireless communication protocols, such as cellular communication, ZigBee, REDLINK^{™}, Bluetooth, Wi-Fi, IrDA, infra-red (IR), dedicated short range communication (DSRC), EnOcean, radio frequency (RF) signals and/or any other suitable common or proprietary wireless protocol, as desired. In some cases, the transmitter 106 may communicate commands from the building control device 100 to a remotely located building control component 114 (e.g., HVAC unit, security unit, lighting unit, fire unit, access control unit, or so on). In certain embodiments, the building control component 114 or an onboard controller of the building control component 114 may include a receiver, and the transmitter 106 may transmit control commands to the building control component 114, which are then carried out by the building control component 114. For example, in certain embodiments, the transmitter 106 of the building control device 100 may communicate commands with an HVAC unit using any suitable communication protocol, such as the BACnet protocol. In some cases, the transmitter 106 may communicate with a security unit using any suitable communication protocol, such as the DC-09 protocol. In some cases, the transmitter 106 may communicate with a fire unit using any suitable communication protocol, such as the Modbus protocol. In some cases, the transmitter 106 may communicate with an access control unit using any suitable communication protocol, such as the EnOcean protocol. In some cases, the transmitter 106 may communicate with a lighting unit using any suitable communication protocol, such as the DALI protocol. These are just examples of building control network protocols that may be used to facilitate communication between the building control device 100 and discrete building control components (e.g., the building control component 114). Other building control communication protocols may include, 1-Wire, C-Bus, CC-Link Industrial Networks, DSI, Dynet, KNX, LonTalk, oBIX, VSCP, xAP, XI0, Z-Wave, INSTEON, TCIP, Ethernet, and/or any other suitable communication scheme. It is contemplated that the communication may be uni-directional or bi-directional, as desired.

In some cases, the building control component 114 may include its own sensors (e.g., temperature sensors, humidity sensors, other environmental sensors, occupancy sensors, light sensors, current sensors, smoke sensors, or so on). The building control component 114 may be configured to monitor and control the settings and conditions in a space based on the sensed parameters sensed by its own sensors.

In some instances, the controller 102 of the building control device 100 may include a pre-programmed chip, such as a very-large-scale integration (VLSI) chip and/or an application specific integrated circuit (ASIC). In such embodiments, the chip may be pre-programmed with control logic in order to control the operation of the building control device 100. In some cases, the pre-programmed chip may implement a state machine that performs the desired functions. By using a pre-programmed chip, the controller 102 may use less power than other programmable circuits (e.g., general purpose programmable microprocessors) while still being able to maintain basic functionality. In other instances, the controller 102 may include a programmable microprocessor. Such a programmable microprocessor may allow a user to modify the control logic of the building control device 100 even after it is installed in the field (e.g., firmware update), which may allow for greater flexibility of the building control device 100 in the field over using a pre-programmed ASIC.

According to various embodiments, the communication module 110 of the building control device 100 may permit the building control device 100 to communicate over one or more low power wireless networks, such as low power network 118, for example. In some instances, the low power network may operate as a "gateway" that allows the building control device 100 to communicate over one or more wireless networks, such as network 120. In some cases, the low power network 118 may be a low power wide area network (LPWAN) and the communication module 110 may utilize a wireless protocol to communicate over the LPWAN. Examples of the low power network 118 may include, but are not limited to, a LoRa, Sigfox, Telensa, NarrowBand Internet of Things (NB-IOT), Nwave, Weightless, DASH7, LTE, and MySensors. In some cases, the communication module 110 may allow the building control device 100 to communicate with a remote device 116 over networks 118 and 120. In some cases, network 120 may include a Local Area Networks (LAN) such as a Wi-Fi network and/or a Wide Area Networks (WAN) such as the Internet and/or a cellular network. These are just some examples.

In various embodiments, the memory 104 of the building control device 100 may be operatively coupled to the controller 102 and may be used to store any desired information, such as application programs (e.g., connection application 126), network credentials, setpoints, IR codes, an IR database, schedule times, zones and groupings of building control components (e.g., building control component 114), and the like. The memory 104 may be any suitable type of storage device including, but not limited to, RAM, ROM, EPROM, flash memory (e.g., NAND flash memory), an external SPI flash memory, a hard drive, and/or the like. In some cases, the memory 104 may include two or more types of memory. For example, the memory 104 may include a RAM, a ROM and a flash memory module.

During operation, the controller 102 may store information within the memory 104, and may subsequently retrieve the stored information from the memory 104. In some cases, program/utility 124 may be stored in the memory 104 and may include a set of application program modules (e.g. software), such as the connection application 126. In some cases, the program/utility 124 may include additional program modules as well as an operating system, one or more other application program modules, and/or program data. According to various embodiments, the application program modules (e.g., the connection application 126) may include network credentials, network ID, keys, for example. In certain embodiments, the connection application 126, including the network credentials, may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages.

The connection application 126 may execute on the building control device 100. In some cases, the connection application 126 may execute on a remote device (e.g., remote device 116). In some cases, part of the connection application 126 may be executed on the building control device 100 and part of the connection application 126 may be executed on the remote device 116. In the latter scenario, the remote device 116 may be connected to the communication module 110 of the building control device 100 through a low power network (e.g., low power network 118) and another type of network (e.g., network 120). For instance, the low power network 118 may be an LPWAN connected to the network 120 that may be a local area network (LAN) or a wide area network (WAN), or the low power network 118 may be connected to the remote device 116 via a router (for example, through the Internet using an Internet Service Provider). In some cases, the connection application 126 may provide instructions to the controller 102 to use the communication module 110 to establish a direct low energy wireless connection (e.g., a low energy Wi-Fi connection, a Bluetooth low energy (BLE) connection, a low energy radio connection, or other connection) with the remote device 116, bypassing a network (e.g., networks 118 and 120), a wireless router, or the like.

The power source 140 may provide power to the building control device 100 for its operations. In some examples, the power source 140 may be a non-rechargeable lithium-based battery. In other examples, a non-rechargeable battery may be made from other suitable materials, as desired. In some instances, the power source 140 may be a rechargeable battery, which may help increase the useable lifespan of the building control device 100. In still other examples, the power source 140 may be some other type of power source, as desired. According to various embodiments and as stated herein, the communication module 110 may be configured to communicate over the low power network 118 and through direct low energy wireless connections. This may enable the building control device 100 to establish wireless connections covering long distances with minimum power consumption and maintenance. As such, the power source 140 may have sufficient battery capacity to power the building control device 100 over a period of years or even decades while maintaining a direct link connection between the building control device 100 and a Local Service Provider (e.g., network 120) and remote devices connected to the network 120 (e.g., the remote device 116).

According to certain embodiments, the remote device 116 may include a user interface 122, an I/O interface 134, a controller 132, a low power network I/O interface 142, and the memory 130 configured similar to memory 104. In some cases, the user interface 122 may permit the remote device 116 to display and/or solicit information, such as desired environmental conditions (e.g., temperature settings, humidity settings, or other settings), security settings, lighting settings, from a user, as well as accept one or more user interactions with the remote device 116. Through the user interface 122, the user may, for example, view and manage the building control device 100 and thus, the building control component 114. When provided, the ability to view and manage the building control device 100 and/or multiple building control devices may facilitate improved management of a building, house, or other structure. In some cases, the remote device 116 may be a smart phone, a tablet computer, a laptop computer, a desktop computer and/or any other suitable device, and the user interface 122 may be a physical user interface that may include a display 136 and/or a distinct keypad 138. The display 136 may be any suitable display. In some instances, the display 136 may include or may be a liquid crystal display (LCD), an OLED, or other display technology, and in some cases a fixed segment display, a dot matrix LCD display, a 7-segment type display, and/or may include one or more LEDs. In some cases, the display 136 may include a touch screen LCD panel that functions as both the display 136 and the keypad 138. In some cases, the user interface 122 may be adapted to solicit network credentials, but this is not required.

In some instances, the I/O interface 134 may be configured to permit the remote device 116 to communicate over network 120. In some cases, the I/O interface 134 may be configured to communicate with two or more controllers, including the building control device 100, for example.

In some instances, the low power I/O interface 142 may be configured to permit the remote device 116 to communicate over the low power network 118 and establish a direct low energy wireless connection. In some cases, the low power I/O interface 142 may be configured to communicate with two or more controllers, including the building control device 100, for example, over the low power network 118 and/or through a local direct low energy wireless connection.

As shown in Figure 1, the remote device 116 may also include the controller 132 configured similar to the controller 102 of the building control device 100, and memory 130 configured similar to memory 104. As discussed herein, in regard to the controller 102 and memory 104, memory 130 of the remote device 116 may be operatively coupled to the controller 132 and may be used to store any desired information. During operation, the controller 132 may store information within memory 130, and may retrieve the stored information from memory 130. In some cases, program/utility 124 may be stored in memory 130 and may include a set of application program modules (e.g., app), such as the connection application 126. According to various embodiments, the application program modules (e.g., the connection application 126) may include or reference network credentials, for example. The connection application 126 may be executed on the remote device 116 or part of the connection application 126 may be executed on the remote device 116.

According to various embodiments, the connection application 126 may enable the building control device 100 to establish multiple connections with the remote device 116. For example, the connection application 126 may cause the controller 102 of the building control device to monitor the area for a low power network (e.g., low power network 118) and use the network credentials (provided by the connection application 126 from the memory 104 or from the memory 130, or other storage) to automatically connect the communication module 110 to the low power network without any assistance from a user, operator, or homeowner. In some cases, this may be done at installation time of the building control device 100. In some cases, the low power network 118 may be connected to a WAN (e.g., network 120) and the I/O interface 134 of the remote device 116 may be connected to the network 120. As such, the remote device 116 may use the low power network 118 and the network 120 to communicate and/or control the building control device 100. In various embodiments, the low power I/O interface 142 of the remote device 116 may be directly connected to the low power network 118. In this case, the remote device 116 may only use the low power network 118 to communicate and/or control the building control device 100. In further embodiments, the remote device 116 may be in the vicinity of the building control device 100 such that a local low energy direct link (e.g., a BLE link) may be established between the communication module 110 and the low power I/O interface 142. In this case, the remote device 116 may use the local low energy direct link to communicate and/or control the building control device 100.

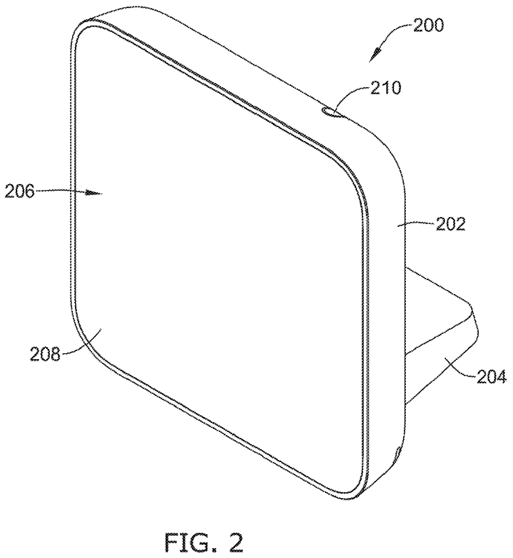

Figure 2 is a perspective view of an illustrative building control device 200 that may be an example of the building control device 100 of Figure 1. In some cases, the building control device 200 may be configured to communicate over a low power network and/or through local low energy direct wireless connections. In some examples, the building control device 200 may be a thermostat that sends commands (e.g., wireless signals) to set, for example, programmable setpoints, operating mode changes and/or other parameters to an HVAC unit. In the example shown, the building control device 200 may include a housing 202 and an optional stand 204 or other standing feature to aid in placing the building control device 200 on a surface, such as on the surface of a table, desk, counter, or the like. Additionally and/or alternatively, in some cases, the building control device 200 may have a mounting feature to aid in mounting the building control device 200 to a wall or ceiling of a room in a building, house, or structure. If battery powered, the housing 202 may include a battery compartment for holding a battery or battery pack (not explicitly shown). The housing 202 may have any shape or size suitable for housing the internal electronics of the building control device 200.

The building control device 200 may include a user interface 206. In some cases, the user interface 206 may include a display 208. In some cases, the display 208 may include or may be an LCD, an OLED, or other display technology, and in some cases a fixed segment display, a dot matrix LCD display, a 7-segment type display, and/or may include one or more LEDs. In the example shown, the display 208 is a touch screen LCD panel that functions as both the display 208 and a keypad. In other cases, the user interface may have a physically distinct keypad. In addition, the housing 202 may include an opening or window 210 to aid in communicating with an HVAC unit. The opening or window 210 may extend at least partially around an outer perimeter of the housing 202. In some cases, the window or opening 210 may be located along the top of the building control device 200. In some cases, the window 210 may be transparent or semi-transparent to low energy signals (e.g., Bluetooth Low Energy (BLE)), and a low energy transmitter and/or receiver may be positioned just behind the window 210. The housing 202 may include a larger opening or window 210 than shown, or multiple windows 210, if desired.

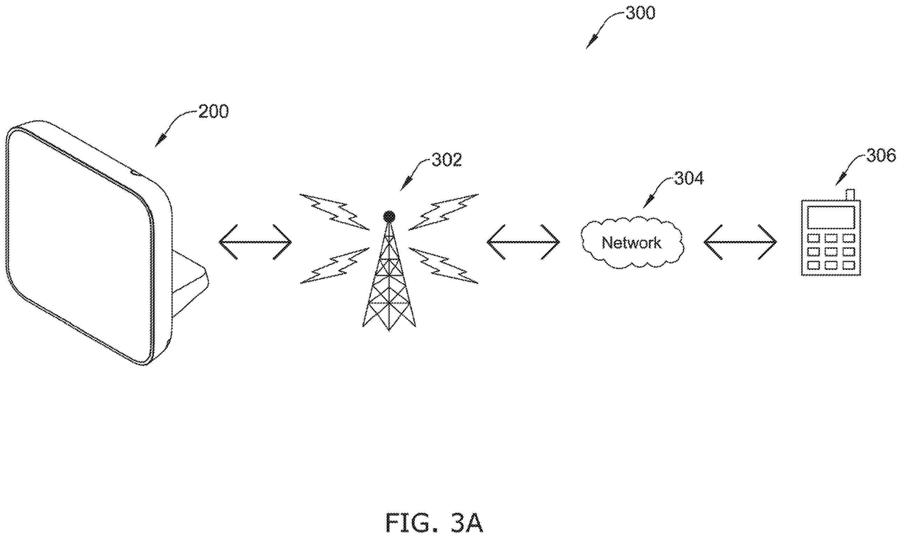

Figure 3A is an illustrative view of an approach 300 for connecting a mobile device 306 to the building control device 200. In some cases, the mobile device 306 may be connected to network 304. Network 304 may be a Local Area Networks (LAN) such as a Wi-Fi network and/or a Wide Area Networks (WAN) such as the Internet and/or a cellular network, for example. In some cases, network 304 may be connected to a low power network 302. In some cases, the low power network 302 may be a low power wide area network (LPWAN). Examples of the low power network 302 may include, but are not limited to, a LoRa, Sigfox, Telensa, NarrowBand Internet of Things (NB-IOT), Nwave, Weightless, DASH7, LTE, and MySensors. During installation of the building control device 200, the building control device 200 may be configured to monitor the area for the low power network 302. Once the building control device 200 discovers the low power network 302, the building control device 200 may then access network credentials to automatically connect to the low power network 302 without any assistance from a user, operator, or homeowner. Since the building control device 200 is now connected to the low power network 302, the low power network 302 is connected to the network 304, and network 304 is connected to the mobile device 306, the building control device 200 is connected to the mobile device 306. Accordingly, the mobile device 306 may use the low energy network 302 and network 304 to communicate and/or control the building control device 200.

According to various embodiments, since the building control device 200 is configured to communicate over the low power network 302, the building control device 200 may establish wireless connections covering long distances with minimum power consumption and maintenance. As such, the building control device 200 may have a power source that may have sufficient battery capacity to power the building control device 200 over a period of years or even decades while maintaining a direct link connection between the building control device 200 and network 304.

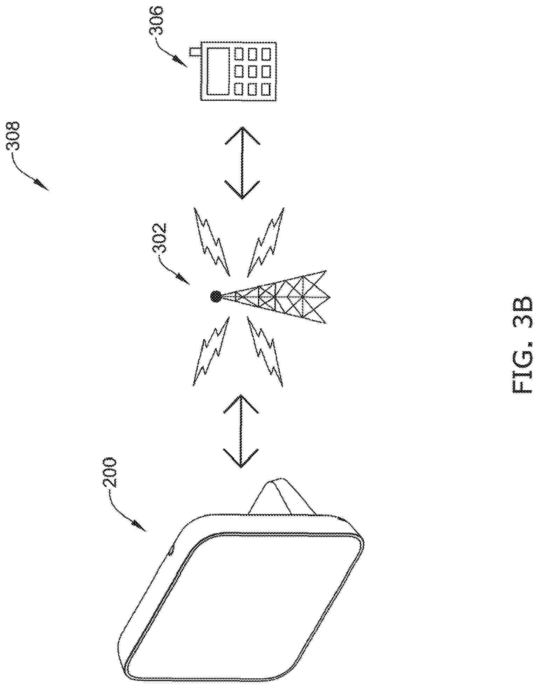

Figure 3B is an illustrative view of another approach 308 for connecting the mobile device 306 to the building control device 200. In some cases, the mobile device 306 may be connected to the low power network 302. During installation of the building control device 200, the building control device 200 may once again monitor the area for the low power network 302. Once the building control device 200 discovers the low power network 302, the building control device 200 may then access network credentials to automatically connect to the low power network 302 without any assistance from a user, operator, or homeowner. Since the building control device 200 is now connected to the low power network 302 and the low power network 302 is connected to the mobile device 306, the building control device 200 is connected to the mobile device 306. Accordingly, the mobile device 306 may use the low energy network 302 to communicate and/or control the building control device 200.

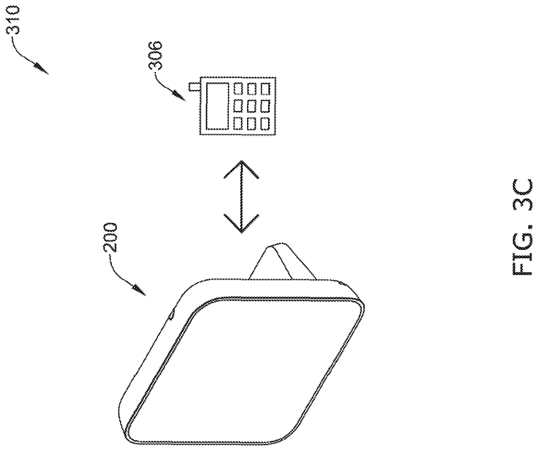

Figure 3C is an illustrative view of another approach 310 for connecting the mobile device 306 to the building control device 200. In this example, the mobile device 306 may be in the vicinity of the building control device 200. As such, the mobile device 306 may establish a local low energy direct link (e.g., a low energy Wi-Fi connection, a Bluetooth low energy (BLE) connection, a low energy radio connection, or other connection) with the building control device 200, bypassing a network (e.g., networks 302 and 304), a wireless router, or the like. Accordingly, the mobile device 306 may use the local low energy direct link to communicate and/or control the building control device 200.

According to various embodiments, since the building control device 200 is configured to communicate over a local low energy direct link, the building control device 200 may have a power source that may have sufficient battery capacity to power the building control device 200 over a period of years or even decades while maintaining the local low energy direct link connection between the building control device 200 and the mobile device 306.

Examples described herein can be machine or computer-implemented at least in part. Some examples can include a computer-readable medium or machine-readable medium encoded with instructions operable to configure an electronic device to perform approaches as described in the above examples. An implementation of such approaches can include code, such as microcode, assembly language code, a higher-level language code, or the like. Such code can include computer readable instructions for performing various approaches. The code may form portions of computer program products. Further, in an example, the code can be tangibly stored on one or more volatile, non-transitory, or non-volatile tangible computer-readable media, such as during execution or at other times. Examples of these tangible computer-readable media can include, but are not limited to, hard disks, removable magnetic or optical disks, magnetic cassettes, memory cards or sticks, random access memories (RAMs), read only memories (ROMs), and the like.

To recap, a device may incorporate electronics incorporating a transmitter configured to wirelessly transmit one or more commands to a remote HVAC unit; a communication module for connecting the device to a low power network; a controller configured to communicate with the HVAC unit via the transmitter, and communicate with a remote device over the low power network via the communication module; and a power source operatively coupled to the electronics and configured to power the electronics.

The device may be further configured to communicate via the transmitter with one or more sensors for sensing environmental conditions.

The electronics may further include one or more sensors for sensing environmental conditions.

The device may further incorporate a housing with the electronics and power source disposed therein.

The electronics may further incorporate a user interface including a display, where the controller may be configured to display on the display current environmental conditions and desired environmental conditions specified by a user via the user interface.

The remote device may send instructions over the low power network to the device to control the HVAC unit.

The low power network may be a low power wide area network (LPWAN).

The LPWAN may be a NarrowBand Internet of Things (NB-IoT) Network.

The LPWAN may be a LoRa Network.

The device may be a thermostat.

A thermostat may incorporate a transmitter configured to wirelessly transmit one or more commands to a remote HVAC unit; a communication module for connecting the device to a low power network; a controller operatively connected to the transmitter and the communication module, and configured to communicate with the HVAC unit via the transmitter, and communicate with a remote device over the low power network via the communication module; and a power source operatively coupled to the transmitter, the communication module, and the controller, and configured to power the transmitter, the communication module, and the controller.

The thermostat may further incorporate a housing with the transmitter, the communication module, the controller, and the power source disposed therein.

The thermostat may further incorporate one or more sensors for sensing environmental conditions, and a user interface including a display. The controller may be configured to display on the display the environmental conditions and desired environmental conditions specified by a user via the user interface.

The thermostat may be further configured to communicate via the transmitter with one or more sensors for sensing environmental conditions, and the thermostat may further incorporate a user interface including a display. The controller may be configured to display on the display the environmental conditions and desired environmental conditions specified by a user via the user interface.

The low power network may be a NarrowBand Internet of Things (IoT) Network.

The low power network may be a LoRa Network.

A thermostat may incorporate a housing; electronics disposed within the housing, having a transmitter configured to wirelessly transmit one or more commands to a remote HVAC unit, a communication module for connecting the device to a low power wide area network (LPWAN), a controller configured to communicate with the HVAC unit via the transmitter, and communicate with a remote device over the LPWAN via the communication module, a user interface including a display, where the controller may be configured to display on the display environmental conditions and desired environmental conditions specified by a user via the user interface; and a power source disposed within the housing, operatively coupled to the electronics, and configured to power the electronics.

The electronics may further incorporate one or more sensors for sensing environmental conditions.

The controller may be further configured to communicate via the transmitter with one or more sensors for sensing environmental conditions.

The LPWAN may be a NarrowBand Internet of Things (IoT) Network.

The above description is intended to be illustrative, and not restrictive. For example, the above-described examples (or one or more aspects thereof) may be used in combination with each other. Also, in the above Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Description as examples or embodiments, with each claim standing on its own as a separate embodiment, and it is contemplated that such embodiments can be combined with each other in various combinations or permutations.

Any publication or patent document noted herein is hereby incorporated by reference to the same extent as if each publication or patent document was specifically and individually indicated to be incorporated by reference.

In the present specification, some of the matter may be of a hypothetical or prophetic nature although stated in another manner or tense.

Although the present system and/or approach has been described with respect to at least one illustrative example, many variations and modifications will become apparent to those skilled in the art upon reading the specification. It is therefore the intention that the appended claims be interpreted as broadly as possible in view of the related art to include all such variations and modifications.

Embodiments of the invention are described in the clauses below:
1. A device comprising:
   electronics incorporating:
      a transmitter configured to wirelessly transmit one or more commands to a remote HVAC unit;
      a communication module for connecting the device to a low power network;
      a controller configured to:
         communicate with the HVAC unit via the transmitter; and
         communicate with a remote device over the low power network via the communication module; and
   a power source operatively coupled to the electronics and configured to power the electronics.
2. The device of clause 1, further configured to communicate via the transmitter with one or more sensors for sensing environmental conditions.
3. The device of clause 1, the electronics further comprising one or more sensors for sensing environmental conditions.
4. The device of clause 1, further comprising a housing with the electronics and power source disposed therein.
5. The device of clause 1, the electronics further comprise a user interface including a display, wherein the controller is configured to display on the display current environmental conditions and desired environmental conditions specified by a user via the user interface.
6. The device of clause 1, wherein the remote device can send instructions over the low power network to the device to control the HVAC unit.
7. The device of clause 1, wherein the low power network is a low power wide area network (LPWAN).
8. The device of clause 7, wherein the LPWAN is a NarrowBand Internet of Things (NB-IoT) Network.
9. The device of clause 7, wherein the LPWAN is a LoRa Network.
10. The device of clause 1, wherein the device is a thermostat.
11. A thermostat comprising:
   a transmitter configured to wirelessly transmit one or more commands to a remote HVAC unit;
   a communication module for connecting the device to a low power network;
   a controller operatively connected to the transmitter and the communication module and configured to:
      communicate with the HVAC unit via the transmitter; and
      communicate with a remote device over the low power network via the communication module; and
   a power source operatively coupled to the transmitter, the communication module, and the controller and configured to power the transmitter, the communication module, and the controller.
12. The thermostat of clause 11, further comprising a housing with the transmitter, the communication module, the controller, and the power source disposed therein.
13. The thermostat of clause 12, further comprising:
   one or more sensors for sensing environmental conditions; and
   a user interface including a display, wherein the controller is configured to display on the display the environmental conditions and desired environmental conditions specified by a user via the user interface.
14. The thermostat of clause 12, further configured to communicate via the transmitter with one or more sensors for sensing environmental conditions and the thermostat further comprises a user interface including a display, wherein the controller is configured to display on the display the environmental conditions and desired environmental conditions specified by a user via the user interface.
15. The thermostat of clause 11, wherein the low power network is a NarrowBand Internet of Things (IoT) Network.
16. The thermostat of clause 11, wherein the low power network is a LoRa Network.
17. A thermostat comprising:
   a housing;
   electronics disposed within the housing, including:
      a transmitter configured to wirelessly transmit one or more commands to a remote HVAC unit;
      a communication module for connecting the device to a low power wide area network (LPWAN);
      a controller configured to:
         communicate with the HVAC unit via the transmitter; and
         communicate with a remote device over the LPWAN via the communication module;
      a user interface including a display, wherein the controller is configured to display on the display environmental conditions and desired environmental conditions specified by a user via the user interface; and
   a power source disposed within the housing, operatively coupled to the electronics, and configured to power the electronics.
18. The thermostat of clause 17, the electronics further comprising one or more sensors for sensing environmental conditions.
19. The thermostat of clause 17, wherein the controller is further configured to communicate via the transmitter with one or more sensors for sensing environmental conditions.
20. The thermostat of clause 17, wherein the LPWAN is a NarrowBand Internet of Things (IoT) Network.

## Claims

1. A device comprising
electronics comprising:
a transmitter configured to wirelessly transmit one or more commands to a remote HVAC unit;
a communication module configured to establish a direct link connection between the device and a low power network;
a controller configured to:
communicate with the HVAC unit via the transmitter; and
directly communicate with a remote device over the low power network via the communication module, wherein the device is configured to
be controlled over the low power network by the remote device; and
a power source operatively coupled to the electronics and configured to power the electronics.

2. The device of claim 1, further configured to communicate via the transmitter with one or more sensors for sensing environmental conditions.

3. The device of any preceding claim, the electronics further comprising one or more sensors for sensing environmental conditions.

4. The device of any preceding claim, further comprising a housing with the electronics and power source disposed therein.

5. The device of any preceding claim, the electronics further comprise a user interface including a display, wherein the controller is configured to display on the display current environmental conditions and desired environmental conditions specified by a user via the user interface.

6. The device of any preceding claim, wherein the device is configured to receive instructions from the remote device over the low power network.

7. The device of any preceding claim, wherein the low power network is a low power wide area network (LPWAN).

8. The device of claim 7, wherein the LPWAN is a NarrowBand Internet of Things (NB-IoT) Network.

9. The device of claim 7, wherein the LPWAN is a LoRa Network.

10. The device of any preceding claim, wherein the device is a thermostat.

11. A building control system comprising:
a device
a remote HVAC unit;
a remote device;
the device comprising
a transmitter configured to wirelessly transmit one or more commands to the remote HVAC unit;
a communication module configured to establish a direct link connection between the device and a low power network;
a controller configured to:
communicate with the HVAC unit via the transmitter; and
directly communicate with the remote device over the low power
network via the communication module; and
a power source operatively coupled to the electronics and configured to power the electronics; and
the remote device configured to directly send instructions over the low power network to the device to control the device.

12. The building control system of claim 11, wherein the remote device comprises a user interface including a display.
